# EUROPEAN PATENT APPLICATION

(11) **EP 4 644 229 A1**
(43) Date of publication of application: **05.11.2025**
(21) Application number: 23912720.2
(22) Date of filing: 18.12.2023
(51) Int. Cl.: B63H 21/38, B63B 25/16, B63B 17/00, C10G 2/00, C01B 3/34

(54) **SHIP**

(30) Priority: 26.12.2022 KR 20220184206; 26.12.2022 KR 20220184207
(71) Applicant: Hanwha Ocean Co., Ltd., Geoje-si, Gyeongsangnam-do 53302 (KR)
(72) Inventor: LEE, Yun Ju, Incheon 22309 (KR)
(74) Representative: Cabinet Beau de Loménie
(86) International application number: PCT/KR2023/020897
(87) International publication number: WO 2024/144045

(57) **Abstract**

A ship includes: a cargo tank storing liquefied gas transported as cargo on the ship; a reformer supplied with methane, carbon dioxide, and water to produce synthesis gas including hydrogen and carbon monoxide; an FT processing unit supplied with the synthesis gas produced in the reformer and converting the synthesis gas into liquid hydrocarbon; and a gas discharge line extending from the cargo tank to the reformer, wherein boil-off gas generated from the liquefied gas in the cargo tank is supplied to the reformer through the gas discharge line for generation of the synthesis gas.

## Description

### [Technical Field]

The present invention relates to a ship and, more particularly, to a ship that can discharge boil-off gas generated from liquefied gas in a cargo tank to a reformer to produce synthesis gas and can convert the synthesis gas into liquid hydrocarbons in an FT processing unit to be supplied as fuel for an on-board consumption site.

### [Background Art]

As global warming intensifies, various efforts have been made around the world to reduce greenhouse gas emissions.

With the expiration of the 1997 Kyoto Protocol, which regulated the obligation of developed countries to reduce greenhouse gases, in 2020, the Paris Climate Change Accord, which was adopted at the 21st Conference of the Parties to the United Nations Convention on Climate Change in Paris, France, in December 2015 and entered into force in November 2016, has led the 195 parties to the agreement to make various efforts to reduce greenhouse gas emissions.

Along with such global trend, there is increasing interest in renewable energy (or renewed energy), such as wind power, photovoltaic power, solar thermal power, bioenergy, tidal power, geothermal energy, and the like, as non-polluting energy that can replace fossil fuels and nuclear power, and various technologies are being developed in the art.

As a specialized United Nations organization established to internationally harmonize shipping routes, traffic rules, port facilities, and the like, the International Maritime Organization (IMO) estimates that greenhouse gas emissions from ships will increase from 2.7% in 2007 to 12% to 18% in 2050, and has added "Prevention of Air Pollution" to Annex VI of the MARPOL Convention to designate SOx (sulfur compounds), NOx (nitrogen oxides), and ODS (ozone depleting substances) as substances subject to regulation in order to prevent air pollution due to ships.

Accordingly, in recent years, techniques using liquefied gases, such as LNG, LPG, CNG, DME, and the like, have been spotlighted as fuel for ships in the art. In particular, since LNG emits 20% less carbon dioxide than petroleum fuels, such as bunker C oil, and emits almost no nitrogen oxides and sulfur oxides, which are the main culprits of air pollution, LNG is evaluated as eco-friendly fuel compared with other fossil fuels. As a result, with the trend of strengthening international emissions regulations, the number of ships using LNG as a propulsion fuel is increasing, including not only LPG or LNG carriers but also general ships.

Although LNG is considered a cleaner fuel than other fossil fuels, LNG still produces carbon dioxide when burned and LNG-fueled ships emit carbon dioxide during operation.

### [Disclosure]

### [Technical Problem]

The International Maritime Organization (IMO) has proposed a target of 50% reduction in greenhouse gases by 2050 and 100% reduction by 2100 (GHG, Zero Emission) compared with 2008, and regulations in each country and region are thus expected to be strengthened.

According to the Energy Efficiency Design Index (EEDI), which is the IMO's mandatory carbon dioxide reduction regulation for newbuilding of ships, the initial EEDI announcement called for EEDI Phase 1, which requires a 10% reduction in carbon dioxide emission in 2015, based on carbon dioxide emission from 2015 to 2013, and EEDI Phase 3 was scheduled to be applied in 2025 through a one-step increase every five years. However, for LPG carriers, EEDI Phase 3 is to be applied early from 2022, two years after application of EEDI Phase 2, and ships ordered after 2030 are required to reduce carbon emissions by 40% compared to ships ordered in 2008 and by 50% by 2050. As such, as international attention to climate change and greenhouse gas emissions grows, regulations on carbon dioxide emissions are rapidly tightening for ships.

In line with this trend of tightening regulations, various technologies are being researched, including the development of eco-friendly fuel technologies that do not emit carbon dioxide, and technologies that capture carbon dioxide from fossil fuel combustion gases and convert or liquefy the captured carbon dioxide into methane or methanol. In particular, since it is inevitable to use fossil fuels until the development of economical renewable energy technology is achieved, it is also necessary to develop technologies that can capture and effectively treat carbon dioxide generated due to use of the fossil fuels.

On the other hand, liquefied gases, such as LNG, LPG, liquefied carbon dioxide, and the like, which are cooled and liquefied to facilitate storage and transportation by ships, continuously generate spontaneously vaporized boil-off gas (BOG) due to heat transferred to cargo tanks during transportation thereof. Generation of boil-off gas in the cargo tanks causes increase in internal pressure of the cargo tanks and, when the internal pressure of the cargo tanks exceeds a preset safe pressure, an emergency situation, such as tank rupture and the like, can occur. Since the boil-off gas is a kind of cargo loss and is an important issue in terms of transportation efficiency of liquefied gas, there is a need for a solution that can safely and effectively treat the boil-off gas generated in cargo tanks.

It is an aspect of the present invention to provide a method for effectively treating boil-off gas generated in cargo tanks while effectively treating carbon dioxide.

### [Technical Solution]

In accordance with one aspect of the present invention, there is provided a ship including: a cargo tank storing liquefied gas transported as cargo on the ship;
a reformer supplied with methane, carbon dioxide, and water to produce synthesis gas including hydrogen and carbon monoxide;
an FT processing unit supplied with the synthesis gas produced in the reformer and converting the synthesis gas into liquid hydrocarbon; and
a gas discharge line extending from the cargo tank to the reformer,
wherein boil-off gas generated from the liquefied gas in the cargo tank is supplied to the reformer through the gas discharge line for generation of the synthesis gas.

The ship may be an LNG carrier, the liquefied gas in the cargo tank may be LNG, boil-off gas generated from the LNG in the cargo tank may be discharged to the reformer through the gas discharge line, and the liquid hydrocarbon produced in the FT processing unit may be supplied as fuel for an on-board consumption site in the ship.

The ship may further include: a carbon dioxide tank storing liquefied carbon dioxide; and a fuel supply line extending from the carbon dioxide tank to the reformer and supplying boil-off gas of carbon dioxide generated in the carbon dioxide tank to the reformer.

The ship may further include: a delivery pump provided to the carbon dioxide tank to pump the liquefied carbon dioxide; and an inline mixer provided to the fuel supply line, wherein, when the amount of boil-off gas of carbon dioxide generated in the carbon dioxide tank is less than the amount of carbon dioxide required for the reformer, the liquefied carbon dioxide delivered through the delivery pump is mixed with the boil-off gas of carbon dioxide in the inline mixer to be supplied to the reformer.

The ship may further include: a liquid supply line, along which the LNG stored in the cargo tank is supplied to an outside of the cargo tank; and an LNG supply pump provided to the cargo tank and delivering the LNG to the liquid supply line, wherein, when the amount of boil-off gas generated in the cargo tank is less than the amount of methane required for the reformer, the LNG delivered through the LNG supply pump is supplied to the reformer.

The ship may further include: an LNG pressurization pump provided to the liquid supply line and pressurizing the LNG depending on a fuel supply pressure of a main engine for propulsion; and a forcible vaporizer heating the LNG pressurized in the LNG pressurization pump depending on a fuel supply temperature of the main engine and supplying the heated LNG to the main engine, wherein the on-board consumption site includes a power generation engine and a boiler.

The on-board consumption site may include a main engine for propulsion, a power generation engine, and a boiler.

The ship may be a carbon dioxide carrier and may further include a fuel tank storing LNG to be supplied as on-board fuel, wherein the liquefied gas in the cargo tank is liquefied carbon dioxide.

The ship may further include: a gas supply line extending from the fuel tank to the reformer and supplying boil-off gas generated from the LNG in the fuel tank to the reformer.

The ship may further include: a liquid supply line, along which the LNG stored in the fuel tank is supplied to an outside of the fuel tank; and an LNG supply pump provided to the fuel tank and delivering the LNG to the liquid supply line, wherein, when the amount of boil-off gas generated in the fuel tank is less than the amount of methane required for the reformer, the LNG delivered through the LNG supply pump is supplied to the reformer.

The ship may further include: an LNG pressurization pump provided to the liquid supply line and pressurizing the LNG depending on a fuel supply pressure of a main engine for propulsion; and a forcible vaporizer heating the LNG pressurized in the LNG pressurization pump depending on a fuel supply temperature of the main engine and supplying the heated LNG to the main engine, wherein the on-board consumption site includes a power generation engine and a boiler.

The ship may further include: a delivery pump provided to the cargo tank to pump the liquefied carbon dioxide; and an inline mixer provided to the gas discharge line, wherein, when the amount of boil-off gas of carbon dioxide generated in the cargo tank is less than the amount of carbon dioxide required for the reformer, the liquefied carbon dioxide delivered through the delivery pump is mixed with the boil-off gas of carbon dioxide in the inline mixer to be supplied to the reformer, and the on-board consumption site includes a main engine for propulsion, a power generation engine, and a boiler.

Carbon dioxide contained in an exhaust gas generated in the main engine for propulsion, the power generation engine and the boiler may be captured and supplied to the reformer.

### [Advantageous Effects]

Embodiments of the present invention provide a ship that can produce synthesis gas from boil-off gas generated from LNG in cargo tanks and can convert the synthesis gas into liquid hydrocarbons to supply the liquid hydrocarbons as fuel for on-board consumption sites.

In this way, the ship according to the embodiments of the present invention can effectively treat boil-off gas generated from LNG in the cargo tanks, thereby preventing increase in internal pressure of the cargo tanks while securing ship safety.

Embodiments of the present invention provide a ship that can produce synthesis gas from boil-off gas of carbon dioxide generated from liquefied carbon dioxide in the cargo tank and can convert the synthesis gas into liquid hydrocarbons to be supplied as fuel for on-board consumption sites.

In this way, the ship according to the embodiments of the present invention can prevent increase in internal pressure of the cargo tanks, can secure safety, and can use the boil-off gas as fuel at consumption sites, such as a power generation engine and the like by effectively treating the boil-off gas of carbon dioxide generated in the cargo tanks, thereby achieving reduction in operating costs and increase in energy efficiency.

Furthermore, the ship according to the embodiments of the present invention captures carbon dioxide from exhaust gases generated in a main engine, a power generation engine, and the like to use the carbon dioxide for production of synthesis gas, thereby minimizing carbon dioxide emissions during ship operation.

### [Description of Drawings]

FIG. 1 is a schematic diagram of a ship according to a first embodiment of the present invention.
FIG. 2 is a schematic diagram of a ship according to a second embodiment of the present invention.
FIG. 3 is a schematic diagram of a ship according to a third embodiment of the present invention.
FIG. 4 is a schematic diagram of a ship according to a fourth embodiment of the present invention.

### [Best Mode]

In order to fully appreciate the operational advantages of the present invention and the objectives achieved by practicing the present invention, reference should be made to the accompanying drawings, which illustrate preferred embodiments of the present invention, and description thereof.

Hereinafter, exemplary embodiments of the present invention will be described in detail in terms of the features and effects thereof with reference to the accompanying drawings.

As used herein, the term "ship" may refer to any type of ship provided with LNG cargo tanks, in which methane is generated as boil-off gas, and may include with self-propelled vessels, such as LNG carriers and LNG regasification vessels (RV), as well as non-self-propelled floating offshore structures, such as LNG floating production storage offloading (FPSO) structures and LNG floating storage regasification (FSRU) structures.

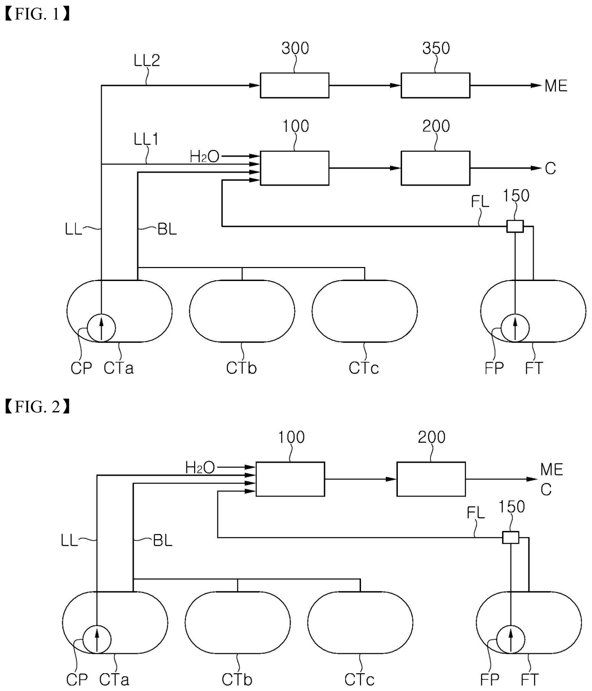

FIG. 1 and FIG. 2 illustrate ships according to first and second embodiments of the present invention. More specifically, FIG. 1 is a schematic diagram of a fuel supply system of an LNG carrier according to the first embodiment of the present invention and FIG. 2 is a schematic diagram of a fuel supply system of an LNG carrier according to the second embodiment of the present invention.

Referring to FIG. 1, the fuel supply system according to the first embodiment includes a plurality of cargo tanks CTa, CTb, CTc each storing LNG transported as cargo of a ship; a reformer 100 supplied with methane, carbon, and water to produce synthesis gas including hydrogen and carbon monoxide; an FT processing unit 200 supplied with the synthesis gas produced in the reformer 100 and converting the synthesis gas into liquefied hydrocarbons; and a gas discharge line BL extending from the cargo tanks to the reformer.

Boil-off gas generated from LNG in the cargo tanks CTa, CTb, CTc is discharged to the reformer 100 through the gas discharge line to be treated in the reformer 100 and the liquid hydrocarbons generated in the FT processing unit 200 are supplied as fuel for an on-board consumption site C.

The ship is provided with a carbon dioxide tank FT that stores liquefied carbon dioxide to supply carbon dioxide to the reformer 100 to be used for production of synthesis gas.

The carbon dioxide tank FT may be realized by a pressure container capable of maintaining an internal pressure above the triple point of carbon dioxide, and stores carbon dioxide in a liquid state. Since carbon dioxide has a triple point at about 5.18 bara and -56.7°C, carbon dioxide changes into a solid phase to form dry ice upon cooling under atmospheric pressure. Therefore, the ship is provided with the carbon dioxide tank FT realized by a pressure container and can store carbon dioxide in a liquid state, which allows more efficient transportation and storage than in a solid state, by maintaining the internal pressure of the carbon dioxide tank at a pressure above the triple point of carbon dioxide while maintaining the temperature of the tank at a temperature less than or equal to the boiling point of carbon dioxide.

Boil-off of carbon dioxide generated in the carbon dioxide tank FT is discharged from the carbon dioxide tank and is supplied to the reformer 100 for production of synthesis gas. To this end, a fuel supply line FL extends from the carbon dioxide tank to the reformer.

The reformer 100 receives methane of LNG boil-off gas supplied from the cargo tanks along the gas discharge line BL, carbon dioxide supplied from the carbon dioxide tank along the fuel supply line, and water to produce synthesis gas including hydrogen and carbon monoxide through reforming gasification as follows.

2CH₄ + CO₂ + H₂O → 5H₂ + 3CO

The synthesis gas produced in the reformer is supplied to the FT processing unit 200 in which the synthesis gas is converted into liquid hydrocarbons (GTL, Gas to Liquid), such as diesel, naphtha and the like, through Fischer Tropsch synthesis reaction in the presence of a catalyst, such as cobalt (Co), iron (Fe), and the like. The FT processing unit may produce liquid hydrocarbons including diesel required for the on-board consumption site to supply the liquid hydrocarbons as fuel thereto.

5H₂ + 3CO → GTL Fuel

In this embodiment, the main engine (ME) for propulsion of the ship may be fueled with LNG from the cargo tanks, and the consumption site C, such as a power generation engine, auxiliary boilers, and the like, may be fueled with the liquid hydrocarbons produced through the reformer and the FT processing unit.

The ship may be provided with a liquid supply line LL, along which LNG stored in the cargo tanks CTa, CTb, CTc is supplied to the outside of the cargo tanks, and an LNG supply pump CP provided to each of the cargo tanks to deliver LNG to the liquid supply line. The liquid supply line is provided with an LNG pressurization pump 300 that pressurizes LNG according to a fuel supply pressure of the main engine for propulsion, and a forcible vaporizer 350 that heats the pressurized LNG according to a fuel supply temperature of the main engine and supplies the heated LNG to the main engine, whereby LNG can be supplied as fuel from the cargo tanks to the main engine through pressurization and heating.

When the amount of boil-off gas generated in the cargo tanks is less than the amount of methane required for the reformer, LNG delivered through the LNG supply pump may be supplied to the reformer. To this end, the liquid supply line LL may be branched upstream of the LNG pressurization pump 300 and connected to the reformer along a line LL1 and the LNG pressurization pump along a line LL2, respectively.

Boil-off gas of carbon dioxide generated in the carbon dioxide tank is supplied to the reformer such that, when the amount of boil-off gas of carbon dioxide generated in the carbon dioxide tank is less than the amount of carbon dioxide required for the reformer, the liquefied carbon dioxide delivered through the delivery pump FP disposed on the carbon dioxide tank may be mixed with the boil-off gas of carbon dioxide in an inline mixer 150 disposed on the fuel supply line FL to be supplied to the reformer.

As hydrocarbon fuels are used in the main engine for propulsion, the power generation engine, and boilers, an exhaust gas contains carbon dioxide. Carbon dioxide contained in the exhaust gas can be captured to be supplied to the reformer or can be captured and liquefied to be stored in the carbon dioxide tank.

FIG. 2 is a schematic diagram of a ship according to a second embodiment of the present invention, in which the main engine for propulsion is also configured to receive the liquid hydrocarbons generated in the FT processing unit.

That is, the ship according to the first embodiment is configured to supply LNG of the cargo tanks to the main engine while supplying the liquid hydrocarbons to the power generation engine, the boilers, and the like, whereas the ship according to the second embodiment is configured to supply the liquid hydrocarbons not only to the power generation engine and the boilers but also to the main engine as the on-board consumption site.

The liquid supply line LL extending from the cargo tanks CTa, CTb, CTc is connected only to the reformer 100 without any branches and LNG delivered through the LNG supply pump CP is supplied to the reformer as fuel for production of synthesis gas and liquid hydrocarbons.

Boil-off gas generated in the plurality of cargo tanks is first supplied to the reformer and, when the amount of boil-off gas generated in the cargo tanks is less than the amount of methane required for the reformer, LNG delivered through the LNG supply pump may be supplied to the reformer.

As such, the systems according to the first and second embodiments can produce and deliver an on-board fuel to the on-board consumption site while safely maintaining the internal pressure of the cargo tanks of the LNG carrier by effectively treating boil-off gas generated in the cargo tanks, thereby reducing costs for ship operation and carbon dioxide emissions upon ship operation.

Ships according to third and fourth embodiments of the present invention described below are carbon dioxide carriers and may be any type of ship, which is provided with cargo tanks for storing liquefied carbon dioxide and a fuel tank for storing LNG to be supplied as an on-board fuel for production of synthesis gas.

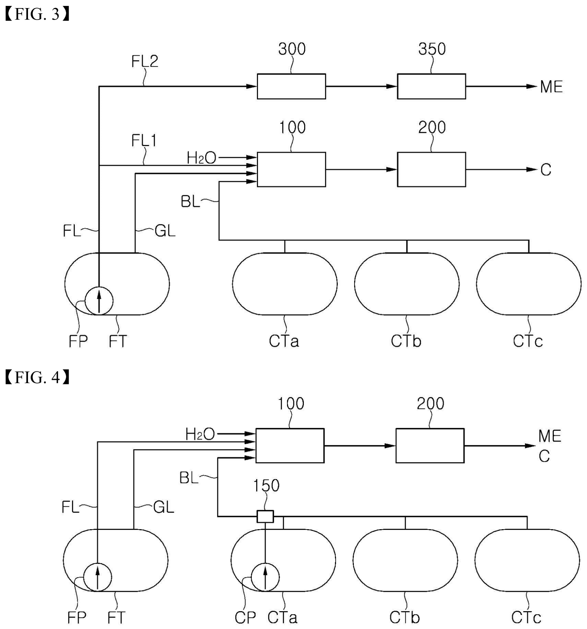

FIG. 3 and FIG. 4 show the ships according to the third and fourth embodiments of the present invention. More specifically, FIG. 3 is a schematic diagram of a boil-off gas treatment system of a carbon dioxide carrier according to the third embodiment of the present invention and FIG. 4 is a schematic diagram of a boil-off gas treatment system of a carbon dioxide carrier according to the fourth embodiment of the present invention.

As shown in FIG. 3 and FIG. 4, the boil-off gas treatment systems according to the third and fourth embodiments are configured to treat boil-off gas of carbon dioxide generated in cargo tanks of the ship, which store liquefied carbon dioxide transported as cargo of the ship.

The ship is provided with a plurality of cargo tanks CTa, CTb, CTc for storing liquefied carbon dioxide and a fuel tank FT for storing LNG to be supplied as an on-board fuel. In these embodiments, a main engine ME for propulsion of the ship may be fueled with LNG from a fuel tank.

The system according to the third embodiment includes: a reformer 100 supplied with methane, carbon dioxide, and water to produce synthesis gas including hydrogen and carbon monoxide; and an FT processing unit 200 supplied with the synthesis gas produced in the reformer and converting the synthesis gas into liquid hydrocarbons, wherein a gas discharge line BL extends from the cargo tanks to the reformer and a gas supply line GL extends from a fuel tank to the reformer such that boil-off gas generated from LNG in the fuel tank is supplied to the reformer.

Boil-off gas of carbon dioxide generated from liquefied carbon dioxide in the cargo tanks CTa, CTb, CTc is discharged from the cargo tanks along the gas discharge line BL and is then supplied to the reformer for production of synthesis gas.

The cargo tanks CTa, CTb, CTc may be realized by pressure containers capable of maintaining the internal pressure above the triple point of carbon dioxide, and store carbon dioxide in a liquid state. Since carbon dioxide has a triple point at about 5.18 bara and -56.7°C, carbon dioxide changes into a solid phase to form dry ice upon cooling under atmospheric pressure. Therefore, the ship is provided with the cargo tanks CTa, CTb, CTc realized by containers capable of sustaining pressure and can store carbon dioxide in a liquid state, which allows more efficient transportation and storage than in a solid state, by maintaining the internal pressure of the cargo tanks at a pressure above the triple point of carbon dioxide while maintaining the temperature of the cargo tanks at a temperature less than or equal to the boiling point of carbon dioxide.

The boil-off of carbon dioxide generated in the cargo tanks CTa, CTb, CTc is discharged from the cargo tanks and is supplied to the reformer 100 for production of synthesis gas. To this end, the gas discharge line BL extends from the carbon dioxide tank to the reformer.

The reformer 100 receives methane of LNG boil-off gas supplied from the fuel tank FT along the gas supply line GL, carbon dioxide supplied from the cargo tanks along the gas discharge line BL, and water to produce synthesis gas including hydrogen and carbon monoxide through reforming gasification as follows.

2CH₄ + CO₂ + H₂O → 5H₂ + 3CO

The synthesis gas produced in the reformer is supplied to the FT processing unit 200 in which the synthesis gas is converted into liquid hydrocarbons (GTL, Gas to Liquid), such as diesel, naphtha and the like, through Fischer Tropsch synthesis reaction in the presence of a catalyst, such as cobalt (Co), iron (Fe), and the like. The FT processing unit may produce liquid hydrocarbons including diesel required for the on-board consumption site to supply the liquid hydrocarbons as fuel thereto.

5H₂ + 3CO → GTL Fuel

In this embodiment, the main engine (ME) for propulsion of the ship may be fueled with LNG from the fuel tank, and the consumption sites C, such as a power generation engine, auxiliary boilers, and the like, may be fueled with the liquid hydrocarbons produced through the reformer and the FT processing unit.

The ship may be provided with a liquid supply line LL, along which LNG stored in the fuel tank FT is supplied to the outside of the fuel tank FT, and an LNG supply pump FP provided to the fuel tank FT to deliver LNG to the liquid supply line. The liquid supply line is provided with an LNG pressurization pump 300 that pressurizes LNG according to a fuel supply pressure of the main engine for propulsion, and a forcible vaporizer 350 that heats the pressurized LNG according to a fuel supply temperature of the main engine and supplies the heated LNG to the main engine, whereby LNG can be supplied as fuel from the fuel tank to the main engine through pressurization and heating.

Boil-off gas of methane generated from LNG in the fuel tank is supplied to the reformer for production of synthesis gas, and when the amount of boil-off gas generated in the fuel tank is less than the amount of methane required for the reformer, LNG delivered through the LNG supply pump FP may be supplied to the reformer. To this end, the liquid supply line FL may be branched upstream of the LNG pressurization pump 300 and connected to the reformer along a line FL1 and the LNG pressurization pump along a line FL2, respectively.

When the amount of boil-off gas of carbon dioxide generated in the cargo tanks is less than the amount of carbon dioxide required for the reformer, some of the liquefied carbon dioxide in the cargo tanks may be supplied to the reformer.

As hydrocarbon fuels are used in the main engine for propulsion, the power generation engine, and the boilers, exhaust gas contains carbon dioxide. Carbon dioxide contained in the exhaust gas can be captured to be supplied to the reformer or can be captured and liquefied to be stored in the cargo tanks.

The ship may be further provided with a storage tank (not shown) for storing liquid hydrocarbons remaining after delivery as fuel for the on-board consumption.

The ship according to the fourth embodiment shown in FIG. 4 is configured to supply liquid hydrocarbons generated in the FT processing unit to the main engine for propulsion.

That is, the ship according to the third embodiment is configured to supply LNG of the fuel tank to the main engine while supplying the liquid hydrocarbons to the power generation engine, the boilers, and the like, whereas the ship according to the fourth embodiment is configured to supply the liquid hydrocarbons not only to the power generation engine and the boilers but also to the main engine as the on-board consumption site.

The liquid supply line FL extending from the fuel tank FT is connected only to the reformer 100 without any branches and LNG delivered through the LNG supply pump FP is supplied to the reformer as fuel for production of synthesis gas and liquid hydrocarbons.

The cargo tank is provided with a delivery pump CP configured to pump liquefied carbon dioxide and the gas discharge line BL is provided with an inline mixer 150. Boil-off gas of carbon dioxide generated in the plurality of cargo tanks is first supplied to the reformer and, when the amount of boil-off gas generated in the cargo tanks is less than the amount of carbon dioxide required for the reformer, the liquefied carbon dioxide delivered through the delivery pump may be mixed with the boil-off gas of carbon dioxide in the inline mixer to be supplied to the reformer.

As such, the systems according to the third and fourth embodiments can maintain the internal pressure of the cargo tanks of the carbon dioxide carrier by effectively treating boil-off gas of carbon dioxide generated in the cargo tanks without discharging carbon dioxide into atmosphere during transportation of liquefied carbon dioxide and can produce an on-board fuel from carbon dioxide to supply the fuel to on-board consumption sites, thereby reducing costs for ship operation and carbon dioxide emission upon ship operation.

Although some embodiments have been described herein, it should be understood that these embodiments are presented by way of example only and that various modifications, changes, alterations, and equivalent embodiments can be made by those skilled in the art without departing from the spirit and scope of the present invention.

## Claims

1. A ship comprising:
a cargo tank storing liquefied gas transported as cargo of the ship;
a reformer supplied with methane, carbon dioxide, and water to produce synthesis gas comprising hydrogen and carbon monoxide;
an FT processing unit supplied with the synthesis gas produced in the reformer and converting the synthesis gas into liquid hydrocarbon; and
a gas discharge line extending from the cargo tank to the reformer,
wherein boil-off gas generated from the liquefied gas in the cargo tank is supplied to the reformer through the gas discharge line for generation of the synthesis gas.

2. The ship according to claim 1, wherein
the ship is an LNG carrier,
the liquefied gas in the cargo tank is LNG,
boil-off gas generated from the LNG in the cargo tank is discharged to the reformer through the gas discharge line, and
the liquid hydrocarbon produced in the FT processing unit is supplied as fuel for an on-board consumption site.

3. The ship according to claim 2, further comprising:
a carbon dioxide tank storing liquefied carbon dioxide; and
a fuel supply line extending from the carbon dioxide tank to the reformer and supplying boil-off gas of carbon dioxide generated in the carbon dioxide tank to the reformer.

4. The ship according to claim 3, further comprising:
a delivery pump provided to the carbon dioxide tank to pump the liquefied carbon dioxide; and
an inline mixer provided to the fuel supply line,
wherein, when the amount of boil-off gas of carbon dioxide generated in the carbon dioxide tank is less than the amount of carbon dioxide required for the reformer, the liquefied carbon dioxide delivered through the delivery pump is mixed with the boil-off gas of carbon dioxide in the inline mixer to be supplied to the reformer.

5. The ship according to claim 4, further comprising:
a liquid supply line, along which the LNG stored in the cargo tank is supplied to an outside of the cargo tank; and
an LNG supply pump provided to the cargo tank and delivering the LNG to the liquid supply line,
wherein, when the amount of boil-off gas generated in the cargo tank is less than the amount of methane required for the reformer, the LNG delivered through the LNG supply pump is supplied to the reformer.

6. The ship according to claim 5, further comprising:
an LNG pressurization pump provided to the liquid supply line and pressurizing the LNG depending on a fuel supply pressure of a main engine for propulsion; and
a forcible vaporizer heating the LNG pressurized in the LNG pressurization pump depending on a fuel supply temperature of the main engine and supplying the heated LNG to the main engine,
wherein the on-board consumption site comprises a power generation engine and a boiler.

7. The ship according to claim 5, wherein the on-board consumption site comprises a main engine for propulsion, a power generation engine, and a boiler.

8. The ship according to claim 1, further comprising:
a fuel tank storing LNG to be supplied as on-board fuel,
wherein the ship is a carbon dioxide carrier and the liquefied gas in the cargo tank is liquefied carbon dioxide.

9. The ship according to claim 8, further comprising:
a gas supply line extending from the fuel tank to the reformer and supplying boil-off gas generated from the LNG in the fuel tank to the reformer.

10. The ship according to claim 9, further comprising:
a liquid supply line, along which the LNG stored in the fuel tank is supplied to an outside of the fuel tank; and
an LNG supply pump provided to the fuel tank and delivering the LNG to the liquid supply line,
wherein, when the amount of boil-off gas generated in the fuel tank is less than the amount of methane required for the reformer, the LNG delivered through the LNG supply pump is supplied to the reformer.

11. The ship according to claim 10, further comprising:
an LNG pressurization pump provided to the liquid supply line and pressurizing the LNG depending on a fuel supply pressure of a main engine for propulsion; and
a forcible vaporizer heating the LNG pressurized in the LNG pressurization pump depending on a fuel supply temperature of the main engine and supplying the heated LNG to the main engine,
wherein the on-board consumption site comprises a power generation engine and a boiler.

12. The ship according to claim 10, further comprising:
a delivery pump provided to the cargo tank to pump the liquefied carbon dioxide; and
an inline mixer provided to the gas discharge line,
wherein, when the amount of boil-off gas of carbon dioxide generated in the cargo tank is less than the amount of carbon dioxide required for the reformer, the liquefied carbon dioxide delivered through the delivery pump is mixed with the boil-off gas of carbon dioxide in the inline mixer to be supplied to the reformer, and
the on-board consumption site comprises a main engine for propulsion, a power generation engine, and a boiler.

13. The ship according to any one of claims 6, 7, 11 and 12, wherein carbon dioxide contained in an exhaust gas generated in the main engine for propulsion, the power generation engine and the boiler is captured and supplied to the reformer.
